**Europäisches Patentamt**

**European Patent Office**

**Office européen des brevets**

(11) Veröffentlichungsnummer: **0 385 146**
**A1**

## (12) EUROPÄISCHE PATENTANMELDUNG

(21) Anmeldenummer: **90102367.1**

(22) Anmeldetag: **07.02.90**

(51) Int. Cl.5: **A01D 41/12, A01D 75/18, A01F 12/16**

(30) Priorität: **25.02.89 DE 3905968**

(43) Veröffentlichungstag der Anmeldung:
**05.09.90 Patentblatt 90/36**

(84) Benannte Vertragsstaaten:
**BE DE DK FR GB IT**

(71) Anmelder: **DEERE & COMPANY**
**1 John Deere Road**
**Moline, Illinois 61265(US)**

(72) Erfinder: **Hirsch, Walter**
**Eichenweg 74**
**D-6654 Kirkel/Limbach(DE)**
Erfinder: **Becker, Herbert**
**Im Haargarten 2**
**D-5660 Zweibrücken(DE)**

(74) Vertreter: **Feldmann, Bernhard et al**
**DEERE & COMPANY European Office Patent**
**Department Steubenstrasse 36-42**
**D-6800 Mannheim 1(DE)**

(54) **Fremdkörpersicherung für eine Erntemaschine.**

(57)

2.1. Fremdkörpersicherungen, wie z. B. eine Steinfangmulde an einem Mähdrescher, werden mit Fremdkörpern, Sand, Schmutz, Erntegutrückständen und Unkraut beaufschlagt, die unter den ständig gegebenen Vibrationen zu einem festhaftenden Gemenge werden und aus einem Gehäuse (12) bisheriger Fremdkörpersicherungen (10) nicht mehr problemlos entfernt werden können.

2.2. Zur einfachen Entleerung des Gehäuses (12) wird deshalb vorgeschlagen, dieses innenkonisch auszubilden, wobei die größte Weite im Bereich einer Auslaßöffnung (38) gegeben ist und/oder einen Mitnehmer (48) vorzusehen, der an einer das Gehäuse (12) verschließenden Klappe (14) angebracht ist, in das Gehäuse (12) hineinragt und mit der Klappe (14) beim Öffnen bewegt wird.

2.3. Derartige Fremdkörpersicherungen (10) finden insbesondere bei Erntemaschinen, wie Mähdreschern, Anwendung.

Xerox Copy Centre

## Fremdkörpersicherung für eine Erntemaschine

Die Erfindung betrifft eine Fremdkörpersicherung für eine Erntemaschine, mit einem Gehäuse zur Aufnahme der Fremdkörper und mit einer Klappe, wobei das Gehäuse Seiten- und Längswände und eine Auslaßöffnung aufweist, die mittels der Klappe geöffnet bzw. geschlossen werden kann.

Derartige Fremdkörpersicherungen, die gelegentlich als Steinfangmulden bezeichnet werden, finden sich insbesondere im Übergangsbereich zwischen einem Schrägförderergehäuse und einem Dreschkorb an einem Mähdrescher. Sie dienen dazu, Steine, Metallteile, Erdklumpen und dergleichen aus dem Erntegutstrom abzusondern, so daß diese in dem Mähdrescher keinen Schaden anrichten können. In regelmäßigen Abständen wird die Steinfangmulde entleert, indem die Klappe geöffnet wird, so daß die Fremdkörper entfernt werden können. Allerdings sammeln sich dort nicht nur grobe Teile an, sondern auch Sand, Erntegutteile, Unkraut u.s.w., so daß sich ein kompaktes Gemenge verschiedenster Güter in dem Gehäuse bildet, das sich aufgrund der Schwingungen, denen eine Erntemaschine ständig unterliegt, zu einem einzigen Klumpen verdichtet und dann zwischen den Wänden haften bleibt. Zum Entfernen dieses verfestigten Gemenges muß dann ein Brechwerkzeug verwendet werden, was einen Zeitverlust bedeutet und sich als anstrengende und schwierige Arbeit erweist, weil die Steinfangmulde in einem schlecht zugänglichen Raum zwischen Schrägförderer, Vorderachse und Gebläse oder Vorbereitungsboden angeordnet ist und schließlich nach unten herausfallende Fremdkörper die Bedienungsperson beschmutzen.

Eine Steinfangmulde dieser Art, wie sie z. B. aus der DE-OS-2 037 659 bekannt ist und eine Auslaßöffnung aufweist, deren Querschnitt kleiner ist als der des Gehäuses, ist deshalb sehr schwer zu entleeren.

Die der Erfindung zugrunde liegende Aufgabe wird darin gesehen, eine Fremdkörpersicherung mit einem Gehäuse zu schaffen, das zuverlässig und leicht zu entleeren ist.

Diese Aufgabe ist erfindungsgemäß durch die Merkmale des Patentanspruchs 1, wie des Patentanspruch 2 gelöst worden, wobei in den weiteren Patentansprüchen Merkmale aufgeführt sind, die die Lösungen in vorteilhafter Weise weiterentwickeln.

Auf diese Weise unterliegt das kompakte Gemenge in dem Gehäuse nicht der Selbsthemmung und entfällt in der Regel ohne weiteres Zutun, sobald die Auslaßöffnung frei ist.

Desgleichen wird gemäß der Lehre des Patentanspruch 2, während die Klappe bewegt wird, das Gemenge von dem Mitnehmer mitgenommen und aus dem Gehäuse geworfen.

Sind beide Maßnahmen miteinander kombiniert, findet eine Entleerung des Gehäuses auch unter widrigsten Umständen statt, d.h. wenn z.B. Mais im halbreifen Zustand für Corn-Cob-Mix oder dergleichen geerntet wird, und die Pflanzensäfte bewirken, daß das Erntegut zudem an den Seiten und Längswänden anklebt.

Die Fremdkörper entfallen unmittelbar nach dem Wegschwenken der Klappe aufgrund der Schwerkraft, wenn das Gehäuse nach unten geöffnet werden kann.

Eine Selbsthemmung des Gemenges unterbleibt auch an den Seitenwänden, wenn diese ebenfalls divergierend verlaufen. Danach stellt der Innenraum des Gehäuses einen ungleichschenkligen Pyramidenstumpf dar.

Erstreckt sich der oder die Mitnehmer über die gesamte Querschnittsfläche der Auslaßöffnung oder zumindest über deren Weite, wird möglichst viel Gemenge ausgeworfen, und es bleiben keine Fremdkörper am Rand der Auslaßöffnung hängen, die ein späteres Schließen der Auslaßöffnung verhindern könnten.

Das Gehäuse wird zudem vollkommen ausgeräumt, wenn der oder die Mitnehmer so nahe wie möglich an eine der Längswände gelangen, weil dann kein Zwischenraum zwischen dem(n) Mitnehmer(n) und der Längswand verbleibt, in dem sich Fremdkörper bei geschlossener Klappe ansammeln könnten.

Es ist günstig, wenn der (die) Mitnehmer die Länge einer der Seiten hat (haben), weil er (sie) dann nicht in den Materialstrom hineinreich(t)(en).

Der Mitnehmer kann anstatt aus einer einzigen versteiften Blechwand auch aus einzelnen Zinken, die einen Rechen ergeben, bestehen.

Für den Fall, daß die vorgeschilderten widrigsten Umstände vorliegen, ist es von Vorteil, wenn die Klappe mit den Mitnehmern über einen, eine Kraftübersetzung ergebenden Hebel verschwenkt werden kann, der möglichst an einer gut zugänglichen Stelle angebracht sein soll.

Die Verwendung eines Über-Totpunkt-Gestänges zwischen dem Hebel und der Klappe sorgt für eine genügende Anpressung der Klappe an das Gehäuse und eine Arretierung in dieser Stellung ohne zusätzliche Riegel oder dergleichen.

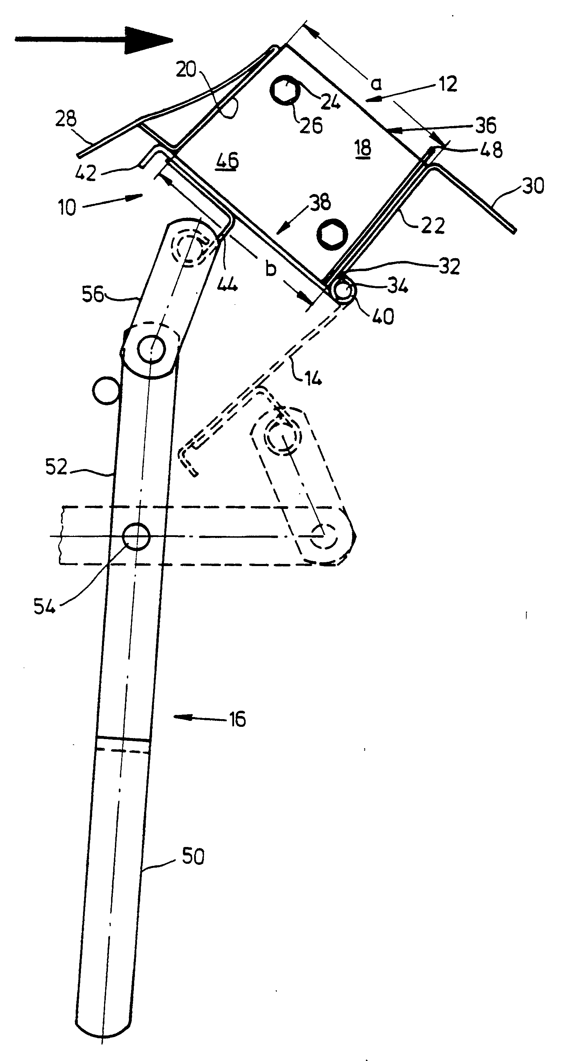

In der Zeichnung ist ein nachfolgend näher beschriebenes Ausführungsbeispiel der Erfindung dargestellt. Es zeigt als einzige Figur eine Fremdkörpersicherung in Seitenansicht und im Schnitt.

Eine Fremdkörpersicherung 10 für eine nicht gezeigte, aber hinlänglich bekannte Erntemaschine, insbesondere für einen Mähdrescher, enthält im wesentlichen ein Gehäuse 12, eine Klappe 14 und einen Hebel 16.

Das Gehäuse 12 setzt sich zusammen aus zwei Seitenwänden 18 und zwei Längswänden 20 und 22, die sich jeweils gegenüberliegen. Die Seiten- und die Längswände 18, 20 und 22 sind an ihren Endbereichen auf nicht gezeigte Weise miteinander verbunden, und zwar entweder verschweißt, oder sie sind aus einem einzigen Blechstreifen gebogen.

Die Seitenwände 18 sind mittels Schrauben 24 an einer nicht gezeigten Seitenwand der Erntemaschine festgelegt, wozu sie vorteilhafterweise eine Bohrung 26 aufweisen, in die gerade noch der Kopf der Schraube 24 paßt. Das Gehäuse 12 wird also nicht an die betreffende Seitenwand gepreßt und dort angeschraubt, sondern nur an dieser gehalten. Anstatt der Schraubenköpfe könnten auch Stifte oder Bolzen vorgesehen werden. Führen die beiden Seitenwände, während sich die Erntemaschine über das Feld bewegt, eine Relativbewegung zueinander aus, entsteht in dem Gehäuse 12 keine Biegebelastung, weil sich dieses gegenüber den Seitenwänden bewegen kann.

Die Längswand 20 ist die stromaufwärts gelegene und weist einen Schenkel 28 auf, an dem die nicht gezeigte Unterseite eines nicht gezeigten Schrägförderergehäuses entlangstreift, und über den das Erntegut in der Richtung des angegebenen Pfeils bewegt wird.

Die Längswand 22 ist die stromabwärts gelegene, die ebenfalls in einen Schenkel 30 übergeht, der in einen Raum zwischen einem nicht gezeigten Dreschkorb und einem ebenfalls nicht gezeigten Förderboden mündet. An ihrer unteren Kante ist die stromabwärts gelegene Längswand 22 mit einer Öse 32 versehen, in die eine Schwenkwelle 34 eingeschoben ist.

Ein zwischen den Seiten- und Längswänden, 18, 20, 22 gebildeter Innenraum 46 ist also oben und unten offen, so daß eine Eingangs- und eine Auslaßöffnung 36 und 38 entsteht. Man erkennt in der Zeichnung, daß die Innenflächen der Längswände 20, 22 zueinander nicht parallel verlaufen, sondern von der Einlaßöffnung 36 zu der Auslaßöffnung 38 divergierend verlaufen. Dies ist in der Zeichnung durch die Angabe zweier Strecken -a- (an der Eingangsöffnung 36) und -b- (an der Auslaßöffnung 38) verdeutlicht, wobei -a-kleiner ist als -b-. Desgleichen können auch die Seitenwände 18 in Richtung auf die Auslaßöffnung 38 zueinander divergierend verlaufen, was aber nicht dargestellt ist. Der Winkel, unter dem die Innenflächen der Seiten- bzw. Längswände 18, 20, 22 von einer parallelen Anordnung abweichen, ist so bemessen, daß eine Selbsthemmung des sich in dem Gehäuse 12 ansammelnden Gemenges unter normalen Umständen nicht mehr möglich ist.

Die Klappe 14 besteht aus einer Blechplatte, die an ihrem rückwärtigen, und in der Zeichnung rechts gelegenen Endbereich Ösen 40 zur Verbindung mit der Schwenkwelle 34, an ihrem vorderen Endbereich eine Bördelkante 42 zur Erhöhung der Biegefestigkeit und in ihrem Mittenbereich einen Halter 44 aufweist. Die Breite der Klappe 14 ist größer als die Weite der Auslaßöffnung 38, also größer als die Abmessung -b-. Auf diese Weise liegt die Klappe 14 mit ihrer Innenseite im geschlossenen Zustand an der Unterkante der Seiten- und Längswände 18, 20, 22 an und verschließt das Gehäuse 12 im Bereich seiner Auslaßöffnung 38. Nimmt die Klappe 14 die Stellung in den ununterbrochenen Linien ein, ist das Gehäuse 12 geschlossen. Nimmt sie die in den unterbrochenen Linien gezeigte und um die Schwenkwelle 34 nach unten geschwenkte Stellung ein, ist es nach unten geöffnet.

An der dem Innenraum 46 zugelegenen Fläche der Klappe 14 ist ein Mitnehmer 48 angebracht, und zwar derart, daß er an der Innenfläche der Längswand 22 zur Anlage kommt, wenn die Klappe 14 die Auslaßöffnung 38 verschließt. Der Mitnehmer 48 ist in diesem Ausführungsbeispiel als Blechplatte ausgebildet, die mit Sicken und/oder Falzen verstärkt und auf die Klappe 14 nahezu senkrecht aufgeschweißt ist. Die Höhe des Mitnehmers 48 entspricht im wesentlichen der Abmessung -b-. Wird die Klappe 14 um die Schwenkwelle 34 geschwenkt, beschreibt die der Klappe 14 abgelegene Kante des Mitnehmers 48 nahezu einen Kreisbogen, der bis an die Innenfläche der Längswand 20 hinreicht.

Wie bereits eingangs erwähnt, kann der Mitnehmer 48 auch aus einer Vielzahl einzelner als Zinken oder dergl. ausgebildeter Mitnehmerelemente bestehen.

Der Hebel 16 enthält einen ersten als Griff ausgebildeten Schenkel 50 und einen zweiten Schenkel 52, und ist auf einem unterhalb der Klappe 14 gelegenen Zapfen 54 zwischen beiden Schenkeln 50, 52 schwenkbar gelagert.

An dem zweiten Schenkel 52 greift gelenkig eine Lasche 56 an, die anderenends auf dem Halter 44 drehbeweglich gehalten ist. Der zweite Schenkel 52 bildet demnach mit der Lasche 56 ein Gestänge, das - wie aus der Zeichnung ersichtlich - zwischen seinen beiden Endstellungen (durchgezogene und unterbrochene Linien) einen Totpunkt überschreitet, in dem es seine größte gesamte Länge hat.

Gemäß der Darstellung in den ununterbrochenen Linien in der Zeichnung nimmt der Hebel 16 eine Stellung ein, in der der Halter 44, die Lasche 56, der erste und der zweite Schenkel 50, 52 und der Zapfen 54 auf nahezu einer Linie liegen und in der die Klappe 14 an die Unterkanten der Seiten- und Längswände 18, 20, 22 gepreßt wird.

Wird der Hebel mit Blick auf die Zeichnung im Uhrzeigerdrehsinn geschwenkt, kommt das Gestänge, bestehend aus dem zweitem Schenkel 52 und der Lasche 56 zunächst in eine Totpunktstellung, in der die Klappe 14 noch stärker angepreßt wird, überschreitet diese und führt im weiteren dazu, daß sich die Lasche 56 auf den zweiten Schenkel 52 zubewegt. Dabei nimmt die Lasche 56 über den Halter 44 die Klappe 14 mit und schwenkt diese entgegen dem Uhrzeigerdrehsinn nach unten. Die Klappe 14, die Lasche 56 und der Hebel 16 nehmen dann die in der Zeichnung mit unterbrochenen Linien gezeigte Entleerstellung ein.

Wird mittels nicht gezeigter Fördervorrichtungen Erntegut oder dergleichen in der Richtung des angegebenen Pfeils über die offene Eingangsöffnung 36 zwischen den beiden Längswänden 20, 22 bewegt, haben Fremdkörper und sonstiges loses Gut in dem Materialstrom die Möglichkeit, in den Raum zwischen den Seiten- und Längswänden 18, 20, 22 zu fallen und dort zu verbleiben. Sobald das Gehäuse 12 mit Fremdkörpern gefüllt ist, wird wie zuvor beschrieben der Hebel 16 im Uhrzeigerdrehsinn geschwenkt und nimmt dabei die Klappe 14 von der Auslaßöffnung 38 weg. Aufgrund der Konizität des Innenraums 46 des Gehäuses 12 kann das Gemenge aus Fremdkörpern, Sand, Unkraut und Ernterückständen nicht an den Seiten- und Längswänden 18, 20, 22 haften und fällt nach unten aus dem Gehäuse 12 heraus. Ist die Klappe 14 - wie in diesem Ausführungsbeispiel der Fall - mit dem Mitnehmer 48 versehen, wird mit der zwangsweise nach unten gezogenen Klappe 14 der Mitnehmer 48 durch den Innenraum 46 bewegt und wirft das darin befindliche Gemenge aus.

Es ist nur bei diesem Ausführungsbeispiel der Mitnehmer 48 vorgesehen und zusätzlich der Innenraum 46 konisch ausgebildet; unter normalen Umständen ist sowohl die eine wie auch die andere Entleerungshilfe alleine geeignet, das Gehäuse 12 zu entleeren.

**Ansprüche**

1. Fremdkörpersicherung (10) für eine Erntemaschine, mit einem Gehäuse (12) zur Aufnahme der Fremdkörper und mit einer Klappe (14), wobei das Gehäuse (14) Seiten-und Längswände (18, 20, 22) und eine Auslaßöffnung (38) aufweist, die mittels der Klappe (14) geöffnet bzw. geschlossen werden kann, dadurch gekennzeichnet, daß die Längswände (20, 22) zu der Auslaßöffnung (38) hin divergierend angeordnet sind.

2. Fremdkörpersicherung (10) für eine Erntemaschine, mit einem Gehäuse (12) zur Aufnahme der Fremdkörper und mit einer Klappe (14), wobei das Gehäuse (12) Seiten-und Längswände (18, 20, 22) und eine Auslaßöffnung (38) aufweist, die mittels der Klappe (14) geöffnet bzw. geschlossen werden kann, dadurch gekennzeichnet, daß die Klappe (14) auf der dem Innenraum (46) des Gehäuses (12) zugelegenen Seite mit mindestens einem Mitnehmer (48) versehen ist.

3. Fremdkörpersicherung für eine Erntemaschine nach Anspruch 1 bzw. 2, dadurch gekennzeichnet, daß die Klappe (14) auf der dem Innenraum (46) des Gehäuses (12) zugelegenen Seite mit mindestens einem Mitnehmer (48) versehen ist, bzw. die Längswände (20, 22) zu der Auslaßöffnung (38) hin divergierend angeordnet sind.

4. Fremdkörpersicherung nach Anspruch 1 oder 3, dadurch gekennzeichnet, daß die Auslaßöffnung (38) an der Unterseite des Gehäuses (12) gelegen ist.

5. Fremdkörpersicherung nach Anspruch 1, 3 oder 4, dadurch gekennzeichnet, daß die Seitenwände (18) zu der Auslaßöffnung (38) hin divergierend angeordnet sind.

6. Fremdkörpersicherung nach einem oder mehreren der vorherigen Ansprüche, dadurch gekennzeichnet, daß sich der Mitnehmer (48) über die gesamte Weite der Auslaßöffnung (38) erstreckt.

7. Fremdkörpersicherung nach einem oder mehreren der vorherigen Ansprüche, dadurch gekennzeichnet, daß der Mitnehmer (48) an eine der Längswände (20, 22) angrenzt oder an dieser zur Anlage kommt, wenn die Klappe (14) ihre schließende Stellung eingenommen hat.

8. Fremdkörpersicherung nach einem oder mehreren der vorherigen Ansprüche, dadurch gekennzeichnet, daß der Mitnehmer (48) eine Vielzahl einzelner Mitnehmerelemente aufweist.

9. Fremdkörpersicherung nach einem oder mehreren der vorherigen Ansprüche, dadurch gekennzeichnet, daß die Klappe (14) mittels eines Hebels (16) zwangsweise bewegbar ist.

10. Fremdkörpersicherung nach Anspruch 9, dadurch gekennzeichnet, daß der Hebel (16) mit einer Lasche (56) ein Über-Totpunkt-Gestänge bildet, das an der Klappe (14) angreift.

# EUROPÄISCHER RECHERCHENBERICHT

## EINSCHLÄGIGE DOKUMENTE

EP 90102367.1

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | US - A - 4 404 975 (WESTBY) * Spalte 2, Zeilen 37 ff; Fig. 2,3 * | 1 | A 01 D 41/12 A 01 D 75/18 A 01 F 12/16 |
| A | * Spalte 2, Zeilen 37 ff; Fig. 2,3 * | 4 | |
| Y | US - A - 3 576 188 (DALE R. TANIS) * Spalte 2, Zeilen 25 ff; Fig. 1,2 * | 1 | |
| A | * Spalte 2, Zeilen 43 ff; Fig. 1-3 * * Spalte 3, Zeilen 12 ff; Fig. 3 * | 2,3,5, 8 9 | |
| A | DE - C1 - 3 402 527 (DEERE & CO) * Spalte 5, Zeilen 17 ff; Fig. 2 * | 10 | |

RECHERCHIERTE
SACHGEBIETE (Int Cl⁵)

A 01 D 41/00
A 01 D 75/00
A 01 F 12/00
F 16 P  7/00

Der vorliegende Recherchenbericht wurde für alle Patentansprüche erstellt.

| Recherchenort | Abschlußdatum der Recherche | Prüfer |
|---|---|---|
| WIEN | 26-03-1990 | SCHNEEMANN |